# EUROPEAN PATENT SPECIFICATION

(11) **EP 2 721 266 B1**
(45) Date of publication and mention of the grant of the patent: **25.11.2015**
(21) Application number: 12735585.7
(22) Date of filing: 11.06.2012
(51) Int. Cl.: F01N 13/18, F01N 13/00

(54) **BY-PASS VALVE ARRANGEMENT AND EXHAUST SYSTEM**
BYPASSVENTILANORDNUNG UND ABGASSYSTEM
AGENCEMENT DE CLAPET DE DÉRIVATION ET SYSTÈME D'ÉCHAPPEMENT

(30) Priority: 14.06.2011 FI 20115584
(43) Date of publication of application: 23.04.2014
(73) Proprietor: Wärtsilä Finland Oy, 65380 Vaasa (FI)
(72) Inventor: LUNDIN, Kaj, FI-65100 Vaasa (FI)
(74) Representative: Berggren Oy Ab
(86) International application number: PCT/FI2012/050583
(87) International publication number: WO 2012/172169

(56) References cited:
- FR-A1- 2 802 443
- FR-A1- 2 859 238
- US-A- 5 398 503

## Description

### Technical field of the invention

The present invention relates to a by-pass valve arrangement for an exhaust system of an internal combustion engine according to the preamble of claim 1. The invention also concerns an exhaust system for an internal combustion engine in accordance with the preamble of the other independent claim.

### Background of the invention

To meet the emission limits, many internal combustion engines are provided with catalyst devices, such as oxidation catalysts and/or catalytic converters for selective catalytic reduction (SCR). In some operating conditions, there might be a need to bypass a catalyst device. This can be the case for instance when a dual-fuel engine is operated on liquid fuel containing sulfur, which would deactivate the oxidation catalyst. Engines therefore often comprise a by-pass duct for guiding exhaust gases past an oxidation catalyst or a catalytic converter for SCR. At least two valves are needed to introduce the exhaust gases into the by-pass duct and to block the connection to the catalyst device. Each of the by-pass valves needs an own actuator and the piping requires a lot of space, which can be a problem especially in ship engines.

The document US5398503 discloses an exhaust emission control system with a single bypass valve fulfilling both functions of opening the bypass duct and blocking the connection to the catalyst device.

### Summary of the invention

An object of the present invention is to provide an improved by-pass valve arrangement for an exhaust system of an internal combustion engine. The characterizing features of the arrangement according to the present invention are given in the characterizing part of claim 1. Another object of the invention is to provide an improved exhaust system for an internal combustion engine.

According to the present invention, the by-pass valve arrangement comprises ducting having a first inlet, a second inlet, a first outlet and a second outlet, and a valve having a first position, in which position fluid flow from the first inlet to the first outlet and from the second inlet to the second outlet is allowed, and fluid flow from the first inlet to the second outlet and from the second inlet to the first outlet is blocked, and a second position, in which position fluid flow from the first inlet to the second outlet and from the second inlet to the first outlet is allowed, and fluid flow from the first inlet to the first outlet and from the second inlet to the second outlet is blocked.

An exhaust system according to the present invention comprises a by-pass valve arrangement defined above.

With the by-pass valve arrangement and exhaust system according to the present invention, an oxidation catalyst or an SCR catalyst can be bypassed by using a single valve instead of several valves. The by-pass valve arrangement is thus compact and inexpensive and can be controlled by a single actuator. The by-pass valve arrangement according to the invention can be arranged for instance between the turbochargers of an engine with two-stage turbocharging. The arrangement can also be beneficial in an engine room of a ship, where the available space is limited. The by-pass valve arrangement is also suitable for engine upgrades.

According to an embodiment of the invention, the second inlet is located at the opposite end of the by-pass valve arrangement in relation to the first inlet. This arrangement enables many different possibilities when positioning a catalyst device and is advantageous especially when the available space is limited.

According to the invention, the ducting comprises a first duct element connecting the first inlet to the first outlet, and a second duct element connecting the second inlet to the second outlet. Still arcording to the invention, each of the first duct element and the second duct element comprises a flange for arranging the valve between the first duct element and the second duct element. This kind of by-pass valve arrangement is simple and inexpensive to manufacture. In many cases, the first and the second duct elements can be identical. Each of the first duct element and the second duct element can be made from a casting. The valve can be a butterfly valve.

According to another embodiment of the invention, the DN size of the valve is 40-60 percent larger than the DN size of the ducting. This ensures that the flow area of the valve is approximately of the same size as the flow area of the ducting.

According to an embodiment of the invention, in the exhaust system the first inlet of the by-pass valve arrangement is in flow communication with an exhaust manifold of the engine, the first outlet is in flow communication with an inlet of a catalyst device, the second inlet is in flow communication with an outlet of the catalyst device, and the second outlet is in flow communication with a turbine inlet of a turbocharger.

According to another embodiment of the invention, in the exhaust system the first inlet of the by-pass valve arrangement is in flow communication with a turbine outlet of a first turbocharger, the first outlet is in flow communication with an inlet of a catalyst device, the second inlet is in flow communication with an outlet of the catalyst device, and the second outlet is in flow communication with a turbine inlet of a second turbocharger.

### Brief description of the drawings

Fig. 1 shows schematically a turbocharged internal combustion engine with an exhaust system according to an embodiment of the present invention.
Fig. 2 shows the engine of Fig. 1 in another operating mode.
Fig. 3 shows an exploded view of a by-pass valve arrangement according to an embodiment of the invention.
Fig. 4 shows the by-pass valve arrangement of Fig. 3 in a first operating mode.
Fig. 5 shows the by-pass valve arrangement of Fig. 3 in a second operating mode.
Fig. 6 shows schematically a turbocharged internal combustion engine with an exhaust system according to an embodiment of the present invention.

### Detailed description of the invention

Embodiments of the invention are now described in more detail with reference to the accompanying drawings.

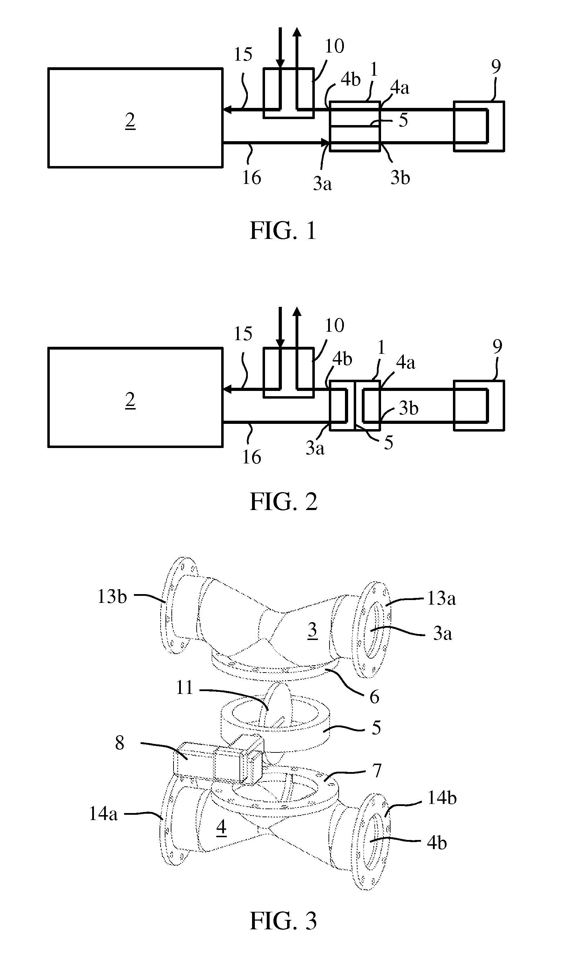

In figure 1 is shown schematically an internal combustion engine 2. The engine 2 is a large internal combustion engine 2, such as an engine that is used as a main or an auxiliary engine of a ship or for producing electricity at a power plant. The exhaust system of the engine 2 comprises an exhaust manifold 16 and a turbocharger 10 for pressurizing the intake air of the engine 2 and guiding it through an intake manifold 15 into the cylinders of the engine 2. The exhaust system is also provided with a catalyst device 9, which can be for instance an oxidation catalyst for reducing hydrocarbon and CO emissions of the engine 2. An oxidation catalyst needs a relatively high exhaust gas temperature, and the oxidation catalyst 9 of the engine 2 is therefore located in the exhaust system upstream from the turbocharger 10. In certain operating conditions of the engine 2, there may be a need to bypass the oxidation catalyst 9 and to guide the exhaust gases from the exhaust manifold 16 directly to the turbocharger 10. For this purpose, the exhaust system of the engine 2 is provided with a by-pass valve arrangement 1.

A by-pass valve arrangement 1 according to an embodiment of the invention is shown in figures 3-5. The by-pass valve arrangement 1 comprises ducting comprising a first inlet 3a, first outlet 3b, second inlet 4a and second outlet 4b. In the embodiment of the figures, the ducting of the by-pass valve arrangement 1 comprises a first duct element 3 and a second duct element 4. The first duct element 3 and the second duct element 4 are V-shaped pipes that can be manufactured for instance by casting. The first duct element 3 connects the first inlet 3a with the first outlet 3b. The second duct element 4 connects the second inlet 4a with the second outlet 4b. The second inlet 4a is located at the opposite end of the by-pass valve arrangement 1 in relation to the first inlet 3a. The nominal flow direction in the second duct element 4 is thus opposite to the nominal flow direction in the first duct element 3. In the embodiment of figures 3-5, the duct elements 3, 4 are shaped so that the flow direction at the outlet 3b, 4b is the same as at the inlet 3a, 4a. However, the duct elements 3, 4 can also be bent so that the flow direction at the outlet 3b, 4b differs from the flow direction at the inlet 3a, 4a. For instance, one or both of the duct elements 3, 4 can be bent so that the outlet 3b, 4b is at an angle of 90 degrees in relation to the inlet 3a, 4a. The inlet end of the first duct element 3 is provided with a first inlet flange 13a and the outlet end of the first duct element 3 is provided with a first outlet flange 13b. The inlet end of second duct element 4 is provided with a second inlet flange 14a and the outlet end of the second duct element 4 is provided with a second outlet flange 14b. The flanges 13a, 13b, 14a, 14b can be used for connecting the by-pass valve arrangement 1 to other parts of the exhaust system.

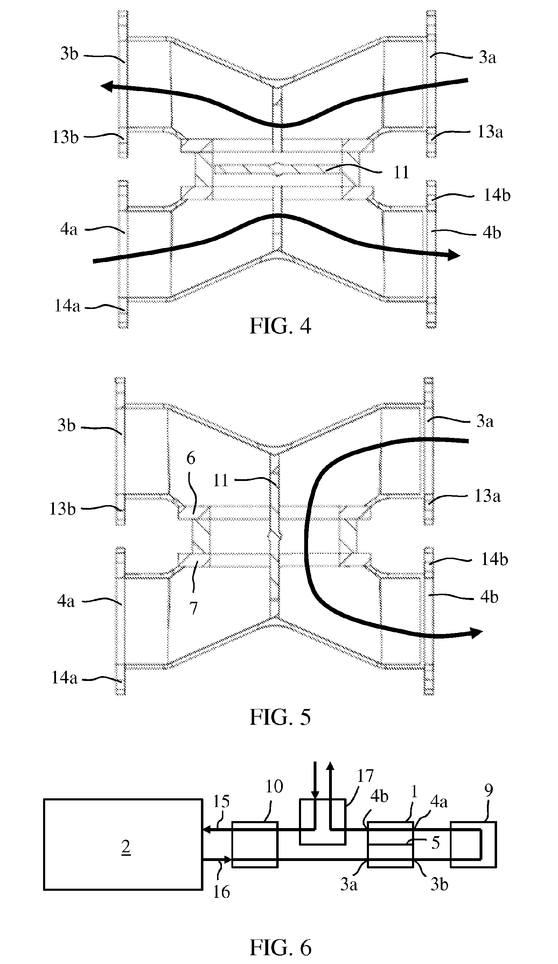

Each of the duct elements 3, 4 is further provided with a valve flange 6, 7 that is arranged in the middle of the duct element 3, 4 for arranging a valve 5 between the duct elements 6, 7. In the embodiment of the figures, the valve 5 is a butterfly valve. The valve 5 is selected so that the DN size of the valve 5 is 40-60 percent larger than the DN size of the ducting. Preferably the DN size is 50 percent larger than the DN size of the ducting. With this selection it is ensured that the flow area of the valve 5 is not smaller than the flow area of the ducting. The valve 5 comprises a valve member 11 having two positions. Figure 4 shows the valve 5 in a first position. In the first position, fluid flow from the first inlet 3a to the first outlet 3b and from the second inlet 4a to the second outlet 4b is allowed, and fluid flow from the first inlet 3a to the second outlet 4b and from the second inlet 4a to the first outlet 3b is blocked. Flow direction at the first outlet 3b is thus the same as at the first inlet 3a, and flow direction at the second outlet 4b is the same as at the second inlet 3a. Figure 5 shows the valve 5 in a second position. In the second position, fluid flow from the first inlet 3a to the second outlet 4b and from the second inlet 4a to the first outlet 3b is allowed, and fluid flow from the first inlet 3a to the first outlet 3b and from the second inlet 4a to the second outlet 4b is blocked. Flow direction at the second outlet 4b is opposite to the flow direction at the first inlet 3a. The valve 5 is provided with an actuator 8 for turning the valve member 11 from the first position to the second position and vice versa. The actuator 8 can be for instance pneumatically, electrically or hydraulically operated. A by-pass valve arrangement 1 according to the invention is simple and compact and can be operated by a single actuator 8.

In the embodiment of figure 1, the first inlet 3a of the by-pass valve arrangement 1 is connected to the exhaust manifold 16 of the engine 2. The first outlet 3b of the by-pass valve arrangement 1 is connected to the inlet of the oxidation catalyst 9. The second inlet 4a of the by-pass valve arrangement 1 is connected to the outlet of the oxidation catalyst 9 and the second outlet 4b is connected to the turbine inlet of the turbocharger 10. During the normal operation of the engine 2, the valve 5 is in the first position and the by-pass valve arrangement 1 works in a first operating mode. Exhaust gases from the engine 2 can thus flow in the exhaust manifold 16 to the first inlet 3a of the by-pass valve arrangement 1 and from the first inlet 3a to the first outlet 3b of the by-pass valve arrangement 1. From the first outlet 3a, the exhaust gases can flow further into the oxidation catalyst 9. From the oxidation catalyst 9, the exhaust gases flow to the second inlet 4a of the by-pass valve arrangement 1 and further through the second outlet 4b to the turbine of the turbocharger 10. The valve member 11 of the valve 5 prevents the exhaust gases from flowing directly from the first duct element 3 into the second duct element 4. When there is a need to bypass the oxidation catalyst 9, the valve 5 is switched to the second position for operating the by-pass valve arrangement 1 in a second operating mode, as shown in figure 2. The flow communication between the first inlet 3a and the first outlet 3b of the by-pass valve arrangement 1 is thus blocked and flow to the oxidation catalyst 9 is prevented. Flow communication between the first inlet 3a and the second outlet 4b is opened and the exhaust gases can flow from the by-pass valve arrangement 1 to the turbine of the turbocharger 10 without flowing through the oxidation catalyst 9.

Figure 6 shows an exhaust system according to another embodiment of the invention. In this embodiment, the exhaust system comprises a first turbocharger 10 and a second turbocharger 17. The first, high-pressure turbocharger 10 is connected in series with the second, low-pressure turbocharger 17. The exhaust system is also provided with a catalyst device 9, which is in case of this embodiment a catalytic converter for selective catalytic reduction. The turbine inlet of the first turbocharger 10 is connected to the exhaust manifold 16 of the engine 2, and the turbine outlet of the first turbocharger 10 is connected to the first inlet 3a of the by-pass valve arrangement 1. The first outlet 3b of the by-pass valve arrangement 1 is connected to the inlet of the catalytic converter 9. The outlet of the catalytic converter 9 is connected to the second inlet 4a of the by-pass valve arrangement 1, and the second outlet 4b of the by-pass valve arrangement 1 is connected to the turbine inlet of the second turbocharger 17. When the valve 5 of the by-pass valve arrangement 1 is in the first position, as in figure 6, exhaust gases can flow from the first turbocharger 10 through the by-pass valve arrangement 1 to the catalytic converter 9. From the catalytic converter 9, the exhaust gases flow through the by-pass valve arrangement 1 to the second turbocharger 17. When there is a need to bypass the catalytic converter 9, the valve 5 is switched to the second position. Exhaust gases flow from the first inlet 3a of the by-pass valve arrangement 1 to the first outlet 3b and further to the catalytic converter 9 is prevented. The first inlet 3a of the by-pass valve arrangement 1 is brought into flow communication with the second outlet 4b of the by-pass valve arrangement 1, and exhaust gases can thus flow from the by-pass valve arrangement 1 directly to the second turbocharger 17.

It will be appreciated by a person skilled in the art that the invention is not limited to the embodiments described above, but may vary within the scope of the appended claims.

## Claims

1. A by-pass valve arrangement (1) for an exhaust system of an internal combustion engine (2), the by-pass valve arrangement (1) comprising ducting having a first inlet (3a), a second inlet (4a), a first outlet (3b) and a second outlet (4b), the arrangement (1) further comprising a valve (5) having
- a first position, in which position fluid flow from the first inlet (3a) to the first outlet (3b) and from the second inlet (4a) to the second outlet is allowed (4b), and fluid flow from the first inlet (3a) to the second outlet (4b) and from the second inlet (4a) to the first outlet (3b) is blocked, and
- a second position, in which position fluid flow from the first inlet (3a) to the second outlet (4b) and from the second inlet (4a) to the first outlet (3b) is allowed, and fluid flow from the first inlet (3a) to the first outlet (3b) and from the second inlet (4a) to the second outlet (4b) is blocked,
the ducting comprising a first duct element (3) connecting the first inlet (3a) to the first outlet (3b), and a second duct element (4) connecting the second inlet (4a) to the second outlet (4b),
**characterized in that** each of the first duct element (3) and the second duct element (4) comprises a flange (6, 7) for arranging the valve (5) between the first duct element (3) and the second duct element (4).

2. An arrangement (1) according to claim 1, **characterized in that** the second inlet (4a) is located at the opposite end of the by-pass valve arrangement (1) in relation to the first inlet (3a).

3. An arrangement (1) according to claim 1 or 2, **characterized in that** each of the first duct element (3) and the second duct element (4) is made from a casting.

4. An arrangement (1) according to any of the preceding claims, **characterized in that** the valve (5) is a butterfly valve.

5. An arrangement (1) according to any of the preceding claims, **characterized in that** the DN size of the valve (5) is 40-60 percent larger than the DN size of the ducting.

6. An exhaust system for an internal combustion engine, **characterized by** a by-pass valve arrangement (1) according to any of claims 1-5.

7. An exhaust system according to claim 6, **characterized in that** the first inlet (3a) of the by-pass valve arrangement (1) is in flow communication with an exhaust manifold (16) of the engine (2), the first outlet (3b) is in flow communication with an inlet of a catalyst device (9), the second inlet (4a) is in flow communication with an outlet of the catalyst device (9), and the second outlet (4b) is in flow communication with a turbine inlet of a turbocharger (10).

8. An exhaust system according to claim 6, **characterized in that** the first inlet (3a) of the by-pass valve arrangement (1) is in flow communication with a turbine outlet of a first turbocharger (10), the first outlet (3b) is in flow communication with an inlet of a catalyst device (9), the second inlet (4a) is in flow communication with an outlet of the catalyst device (9), and the second outlet (4b) is in flow communication with a turbine inlet of a second turbocharger (17).

## Patentansprüche

1. Umgehungsventilanordnung (1) für eine Abgasanlage einer Brennkraftmaschine (2), wobei die Umgehungsventilanordnung (1) Kanäle umfasst, die einen ersten Einlass (3a), einen zweiten Einlass (4a), einen ersten Auslass (3b) und einen zweiten Auslass (4b) aufweisen, wobei die Anordnung (1) ferner ein Ventil (5) umfasst, welches aufweist:
- eine erste Position, wobei in dieser Position ein Fluidstrom von dem ersten Einlass (3a) zu dem ersten Auslass (3b) und von dem zweiten Einlass (4a) zu dem zweiten Auslass (4b) ermöglicht wird und ein Fluidstrom von dem ersten Einlass (3a) zu dem zweiten Auslass (4b) und von dem zweiten Einlass (4a) zu dem ersten Auslass (3b) blockiert wird, und
- eine zweite Position, wobei in dieser Position ein Fluidstrom von dem ersten Einlass (3a) zu dem zweiten Auslass (4b) und von dem zweiten Einlass (4a) zu dem ersten Auslass (3b) ermöglicht wird und ein Fluidstrom von dem ersten Einlass (3a) zu dem ersten Auslass (3b) und von dem zweiten Einlass (4a) zu dem zweiten Auslass (4b) blockiert wird,
wobei die Kanäle ein erstes Kanalelement (3), das den ersten Einlass (3a) mit dem ersten Auslass (3b) verbindet, und ein zweites Kanalelement (4), das den zweiten Einlass (4a) mit dem zweiten Auslass (4b) verbindet, umfassen,
**dadurch gekennzeichnet, dass** das erste Kanalelement (3) und das zweite Kanalelement (4) jeweils einen Flansch (6, 7) zum Anordnen des Ventils (5) zwischen dem ersten Kanalelement (3) und dem zweiten Kanalelement (4) umfassen.

2. Anordnung (1) nach Anspruch 1, **dadurch gekennzeichnet, dass** der zweite Einlass (4a) an dem zu dem ersten Einlass (3a) entgegengesetzten Ende der Umgehungsventilanordnung (1) angeordnet ist.

3. Anordnung (1) nach Anspruch 1 oder 2, **dadurch gekennzeichnet, dass** sowohl das erste Kanalelement (3) als auch das zweite Kanalelement (4) aus einem Gussstück hergestellt sind.

4. Anordnung (1) nach einem der vorhergehenden Ansprüche, **dadurch gekennzeichnet, dass** das Ventil (5) eine Absperrklappe ist.

5. Anordnung (1) nach einem der vorhergehenden Ansprüche, **dadurch gekennzeichnet, dass** der Nenndurchmesser des Ventils (5) um 40-60 Prozent größer als der Nenndurchmesser der Kanäle ist.

6. Abgasanlage für eine Brennkraftmaschine, **gekennzeichnet durch** eine Umgehungsventilanordnung (1) nach einem der Ansprüche 1-5.

7. Abgasanlage nach Anspruch 6, **dadurch gekennzeichnet, dass** der erste Einlass (3a) der Umgehungsventilanordnung (1) in Fließverbindung mit einem Abgaskrümmer (16) der Kraftmaschine (2) steht, der erste Auslass (3b) in Fließverbindung mit einem Einlass einer Katalysatorvorrichtung (9) steht, der zweite Einlass (4a) in Fließverbindung mit einem Auslass der Katalysatorvorrichtung (9) steht und der zweite Auslass (4b) in Fließverbindung mit einem Turbineneinlass eines Turboladers (10) steht.

8. Abgasanlage nach Anspruch 6, **dadurch gekennzeichnet, dass** der erste Einlass (3a) der Umgehungsventilanordnung (1) in Fließverbindung mit einem Turbinenauslass eines ersten Turboladers (10) steht, der erste Auslass (3b) in Fließverbindung mit einem Einlass einer Katalysatorvorrichtung (9) steht, der zweite Einlass (4a) in Fließverbindung mit einem Auslass der Katalysatorvorrichtung (9) steht und der zweite Auslass (4b) in Fließverbindung mit einem Turbineneinlass eines zweiten Turboladers (17) steht.

## Revendications

1. Agencement de clapet de dérivation (1) pour un système d'échappement d'un moteur à combustion interne (2), l'agencement de clapet de dérivation (1) comprenant une la conduite ayant une première entrée (3a), une deuxième entrée (4a), une première sortie (3b) et une deuxième sortie (4b), l'agencement (1) comprenant en plus un clapet (5) ayant
- une première position, dans laquelle l'écoulement de fluide de la première entrée (3a) vers la première sortie (3b) et de la deuxième entrée (4a) vers la deuxième sortie (4b) est autorisé et l'écoulement de fluide de la première entrée (3a) vers la deuxième sortie (4b) et de la deuxième entrée (4a) vers la première sortie (3b) est bloqué, et
- une deuxième position, dans laquelle l'écoulement de fluide de la première entrée (3a) vers la deuxième sortie (4b) et de la deuxième entrée (4a) vers la première sortie (3b) est autorisé et l'écoulement de fluide de la première entrée (3a) vers la première sortie (3b) et de la deuxième entrée (4a) vers la deuxième sortie (4b) est bloqué,
la conduite comprenant un premier élément de conduite (3) raccordant la première entrée (3a) à la première sortie (3b) et un deuxième élément de conduite (4) raccordant la deuxième entrée (4a) à la deuxième sortie (4b)
**caractérisé en ce que** chaque premier élément de conduite (3) et deuxième élément de conduite (4) comprend une bride (6, 7) pour agencer le clapet (5) entre le premier élément de conduite (3) et le deuxième élément de conduite (4).

2. Agencement (1) selon la revendication 1 **caractérisé en ce que** la deuxième entrée (4a) est située à l'extrémité opposée de l'agencement de clapet de dérivation (1) par rapport à la première entrée (3a).

3. Agencement (1) selon la revendication 1 ou 2 **caractérisé en ce que** chaque premier élément de conduite (3) et deuxième élément de conduite (4) est réalisé à partir d'une pièce moulée.

4. Agencement (1) selon l'une quelconque des revendications précédentes **caractérisé en ce que** le clapet (5) est une vanne papillon.

5. Agencement (1) selon l'une quelconque des revendications précédentes **caractérisé en ce que** la taille DN du clapet (5) est 40-60 pour cent plus grande que la taille DN de la conduite.

6. Système d'échappement pour un moteur à combustion interne **caractérisé par** un agencement de clapet de dérivation (1) selon l'une quelconque des revendications 1-5.

7. Système d'échappement selon la revendication 6 **caractérisé en ce que** la première entrée (3a) de l'agencement de clapet de dérivation (1) est en communication d'écoulement avec un collecteur d'échappement (16) du moteur (2), la première sortie (3b) est en communication d'écoulement avec une entrée d'un dispositif catalyseur (9), la deuxième entrée (4a) est en communication d'écoulement avec une sortie du dispositif catalyseur (9) et la deuxième sortie (4b) est en communication d'écoulement avec une entrée de turbine d'un turbocompresseur (10).

8. Système d'échappement selon la revendication 6 **caractérisé en ce que** la première entrée (3a) de l'agencement de clapet de dérivation (1) est en communication d'écoulement avec une sortie de turbine d'un premier turbocompresseur (10), la première sortie (3b) est en communication d'écoulement avec une entrée d'un dispositif catalyseur (9), la deuxième entrée (4a) est en communication d'écoulement avec une sortie du dispositif catalyseur (9) et la deuxième sortie (4b) est en communication d'écoulement avec une entrée de turbine d'un deuxième turbocompresseur (17).
